(19) Europäisches Patentamt
European Patent Office
Office européen des brevets

(11) EP 0 994 617 A1

(12) **EUROPEAN PATENT APPLICATION**

(43) Date of publication:
**19.04.2000 Bulletin 2000/16**

(51) Int. Cl.7: **H04N 1/40**, H04N 1/401

(21) Application number: **99307958.1**

(22) Date of filing: **08.10.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **09.10.1998 JP 28831898**

(71) Applicant:
**Futaba Denshi Kogyo Kabushiki Kaisha**
**Mobara-shi, Chiba-ken (JP)**

(72) Inventor: **Fuyuki, Toshimitsu**
**Mobara-shi, Chiba-ken (JP)**

(74) Representative:
**Rees, David Christopher et al**
**Kilburn & Strode**
**20 Red Lion Street**
**London WC1R 4PJ (GB)**

# (54) Optical printer head and light-amount control method in optical printer head

(57) A light-amount control method in an optical printer head capable of correcting a variation in light amount due to voltage application to electrodes corresponding to luminous dots neighboring a luminous dot concerned. Time of voltage application to each of luminous dots is determined in view of a variation in light amount due to luminous dots neighboring the luminous dot, to thereby accurately output light amount required for each of the luminous dots in correspondence to image data. This eliminates a deterioration in image quality due to a variation in light amount owing to the neighboring luminous dots.



Printed by Xerox (UK) Business Services
2.16.7 (HRS)/3.6

## Description

This invention relates to an optical printer head including a line light source constituted by a plurality of luminous dots and a light-amount control method in such an optical printer head.

There has been conventionally known an optical printer which uses a line light source such as a vacuum fluorescent tube, a light emitting diode (LED) or the like as an optical printer head to linearly subsequently expose a photosensitive film or the like. An optical printer head which has a vacuum fluorescent tube incorporated therein so as to act as a light source is disclosed in Y. Shimizu and Y. Kobori, "Compact Color Hard Copy System Using Vacuum Fluorescent Print Head", IS&T's 50th Annual Conference, 248 (1997) and the like. Such a line light source is called a fluorescent printer head.

Now, a luminous dot pattern of a conventional fluorescent printer head will be described with reference to Figs. 5(a) and 5(b), wherein Fig. 5(a) shows a one-line array pattern and Fig. 5(b) shows a staggered or offset two-line array pattern. Reference numeral 31 designates luminous dots, 32 is odd-numbered luminous dots and 33 is even-numbered luminous dots.

In Fig. 5(a), the luminous dots 31 are arranged at identical pitches on a straight line with slight intervals being defined therebetween.

In Fig. 5(b), the odd-numbered luminous dots 32 and even-numbered luminous dots 33 of the same configuration are alternately arranged in an offset manner at the same intervals as a width of the luminous dots. In either case, j=1 to j=N are assigned to the luminous dots in order from left to right. Alternatively, a plurality of luminous dots may be arranged on three or more straight lines. In this case as well, the luminous dots are arranged alternately in order on the respective lines.

Light emitted from the luminous dots 31 is irradiated on a photosensitive film through a converging optical system such as a reflecting mirror, a selfoc lens array (SLA) or the like, resulting in the photosensitive film being exposed. The vacuum fluorescent tube and optical system are transferred while defining a direction perpendicular to a longitudinal direction of a row of the luminous dots 3 as a main scan direction. When static driving takes place, the photosensitive film is concurrently linearly exposed in a sub-scan direction by light emitted from the luminous dots. In the offset array shown in Fig. 5(b), the photosensitive film is linearly exposed at every second interval by the even-numbered luminous dots and a linear region at every second dot which has not been exposed is exposed by the odd-numbered luminous dots 32 with movement in the main scan direction. When movement in the main scan direction is completed, an image is formed on the photosensitive film. In this case, an image is directly formed on the photosensitive film or record medium. Alternatively, a photosensitive drum charged is exposed to form a latent image thereon, which is then developed, followed by transfer of the image to paper.

The conventional fluorescent printer head described above causes a variation in luminous intensity of the luminous dots 31, 32 or 33. Thus, in order to increase printing quality, the amount of light emitted from the luminous dots is equalized. For this purpose, it is carried out to previously measure luminous intensity of the luminous dots 31, 32 or 33 to prepare light-amount correction data and then store the light-amount correction data in a read only memory (ROM), to thereby correct the light amount when an image is formed on the photosensitive film.

However, in a vacuum fluorescent tube or device of the static driving type wherein a plurality of luminous dots are concurrently driven, certain luminous dots (i) are varied in luminous intensity depending on luminescence of luminous dots (i-1) adjacent to the luminous dots (i) which are concurrently subject to static driving. In the prior art, light-amount correction is carried out by merely measuring luminous intensity of the luminous dots (i) obtained when the luminous dots are turned on, without considering luminescence of the neighboring luminous dots (i-1). This causes an image printed to be deteriorated in quality when the number of gray levels of the image is increased or a color image is printed.

Now, an effect of voltage application to electrodes corresponding to the neighboring luminous dots on luminous intensity of the luminous dots (i) concerned will be described with reference to the linear array shown in Fig. 5(a). Luminous intensity of each of the luminous dots (i) emitting light is varied depending on luminescence of the luminous dots 31 of several in number adjacent to the luminous dot (i) such as, for example, two neighboring luminous dots (i-2) and (i-1) on a left side and two neighboring luminous dots (i+1) and (i+2) on a right side. The cause is due to a variation in distribution of an electric field in the vacuum fluorescent tube. More particularly, application of a positive anode voltage to an anode corresponding to the luminous dot (i) leads to luminescence of the luminous dot (i). At this time, a positive voltage is concurrently applied to anodes adjacent to the anode, so that a distribution in electric field is affected to cause luminous intensity of the luminous dot (i) to be varied when luminous dots corresponding to the adjacent or neighboring anodes emit light.

A fluorescent printer head is adapted to control light amount $E_i$ of each of the luminous dots (i) by varying voltage application time (pulse width) $T_i$ during which a voltage is applied to the anode corresponding to the luminous dot (i), resulting in carrying out indication of gray levels. However, luminous intensity of the luminous dot (i) is varied depending on application of a voltage to the anodes corresponding to the adjacent luminous dots (j), so that light amount of the luminous dot (i) is caused to be complicatedly varied due to overlapping of voltage application time of the anodes corresponding to the adjacent or neighboring luminous dots (j).

The light amount $E_i$ which each of the luminous dots (i) is required to exhibit is supposed to be predetermined by a conversion formula $E_i=g(C_i)$ based on concentration data $C_i$ of an image to be printed on a photosensitive film. Thus, determination of anode voltage application time $T_i$ of the luminous dot (i) required for outputting the predetermined light amount $E_i$ will be now considered.

In the prior art described above, when light amount of the luminous dot (i) corresponding to the concentration data $C_i$ of the image desired to be displayed is $E_i$ (J/cm$^2$), the anode voltage application time $T_i$ (sec) is determined by the following formula (1):

$$T_i = E_i/P_i \quad i = 1, 2, \cdot\cdot\cdot, N \qquad (1)$$

wherein $P_i$ (W/cm$^2$) indicates luminous intensity of the i-th luminous dot 31 and is set on the basis of a value obtained by measurement carried out when it is solely turned on. N indicates the total dot number of the luminous dots 31 of the fluorescent printer head.

Gray level data $D_1$ on the anode voltage application time $T_i$ of each luminous dot (i) which are inputted to an integrated circuit IC for driving are obtained according to the following formula (2) while subjecting $T_i$ to quantization:

$$D_i=\text{Integer}\ [\text{Min}((T_i/T_{max}),\ 1)\times(2^q-1)] \qquad (2)$$

wherein $T_{max}$ is a maximum quantization level of the voltage application time, for which an upper limit value of the voltage application time is usually used. q is a quantization bit number (gray level bit number).

Actually, processing such as adjustment of the anode voltage or the like is carried out. However, this corresponds to adjustment of a value of the luminous intensity $P_i$ described above, thus, it may be expressed by the formulas (1) and (2) described above. The prior art assumes that relationship expressed by the following formula (3) is established between the light amount $E_i$ and the voltage application time $T_i$:

$$E_i = P_i T_i \qquad (3)$$

wherein $P_i$ is luminous intensity. The formula (3) indicates that the light amount $E_i$ of the luminous dot (i) would be determined by only the voltage application time $T_i$. However, in the actual fluorescent printer head, the light amount $E_i$ of each of the luminous dots (i) is varied by not only the voltage application time $T_i$ of the luminous dot (i) but application of a voltage to the electrodes corresponding to the luminous dots adjacent to the luminous dot (i) which concurrently emit light during voltage application to the luminous dot (i). This results in the light amount $E_i$ outputted being rendered different from light amount required in correspondence to the concentration data $C_i$ on the image, leading to a deterioration in quality of the image.

In the prior art, a grid voltage (Ec) is set at a considerably high level in order to minimize a variation in light amount due to driving of the adjacent or neighboring luminous dots.

Now, an effect of voltage application to the electrodes corresponding to the neighboring luminous dots on a variation in light amount on the luminous dot concerned will be described with reference to Fig. 6, wherein an axis of abscissas indicates the grid voltage and an axis of ordinates indicates the luminous intensity. Fig. 6 shows luminous intensity $P_i$ (00100) of the luminous dot (i) obtained when voltage application to the electrodes corresponding to the two neighboring luminous dots on each of the left and right sides is zero (OFF) and luminous intensity $P_i$ (11111) obtained when it is 1 (ON). It will be noted that setting of the grid voltage at a high level still causes a difference as high as about 10% although it reduces the variation due to driving of the neighboring luminous dots.

Fig. 7 shows relationship between a grid voltage and a grid current, wherein an axis of abscissas indicates the grid voltage and an axis of ordinates is a grid current. An increase in grid voltage causes an increase in reactive current, leading to an increase in power consumption. Thus, use of the fluorescent printer head for a portable printer reduces service time of a battery or cell and causes an increase in temperature of the vacuum fluorescent tube due to heat generation. This not only leads to temperature-quenching of a phosphor but causes discharge of residual gas adhered to a wall of the vacuum fluorescent tube, leading to a deterioration in characteristics of the vacuum fluorescent tube and instability thereof.

It would be considered that an interval between the luminous dots (i) concurrently selected is increased to carry out time-division driving. However, such approach likewise reduces a duty factor of a drive pulse signal with respect to the individual luminous dots, to thereby reduce the light amount correspondingly, leading to a deterioration in performance of the fluorescent printer head.

The present invention has been made in view of the foregoing disadvantage of the prior art.

Accordingly, it is an object of the present invention to provide a light-amount control method in an optical printer head which is capable of correcting a variation in light amount of a luminous dot concerned due to voltage application to electrodes corresponding to luminous dots adjacent to the concerned luminous dot.

It is another object of the present invention to provide an optical printer head which is capable of correcting a variation in light amount of a luminous dot concerned due to voltage application to electrodes corresponding to adjacent or neighboring luminous dots.

In accordance with one aspect of the present invention, a light-amount control method in an optical printer head is provided which is adapted to control time of voltage application to electrodes corresponding to a plurality of luminous dots to control light amount emitted from the luminous dots. The light-amount control method includes the step of outputting the time of voltage application to the electrodes corresponding to the luminous dots while correcting a variation in light amount due to voltage application to the electrodes corresponding to the neighboring luminous dots adjacent to each, of the luminous dots with respect to target light amount required depending on input image data for each of the luminous data.

In a preferred embodiment of the present invention, luminous intensity set for every ON-OFF combination pattern of voltage application to the electrodes corresponding to at least the neighboring luminous dots is used as luminous intensity data for each of the luminous data. The time of voltage application to the electrodes corresponding to the luminous dots is outputted so that light amount obtained by integrating the luminous intensity data with time for each of the luminous dots provides target light amount required depending on the input image data for each of the luminous dots.

In a preferred embodiment of the present invention, the light amount obtained by integrating the luminous intensity data with time is represented in the form of a multivariable function having coefficients depending on a variation in the combination pattern depending on a variable constituted by time of voltage application to the electrodes corresponding to each of the luminous dots and the neighboring luminous dots. The time of voltage application to the electrodes corresponding to the luminous dots is outputted by solving simultaneous equations wherein the multivariable function for each of the luminous dots and the target light amount required depending on the input image data for each of the luminous dots are supposed to be equal to each other.

In accordance with another aspect of the present invention, an optical printer head is provided, which is adapted to control time of voltage application to electrodes corresponding to a plurality of luminous dots to control light amount emitted from the luminous dots. The optical printer head includes a light-amount variation correction section fed with target light amount required depending on input image data for each of the luminous dots to correct a variation in light amount due to voltage application to the electrodes corresponding to the neighboring luminous dots adjacent to each of the luminous dots, to thereby output the time of voltage application to the electrodes corresponding to the luminous dots.

These and other objects and many of the attendant advantages of the present invention will be readily appreciated as the same becomes better understood by reference to the following detailed description when considered in connection with the accompanying drawings; wherein:

Fig. 1 is a diagrammatic view showing relationship between voltage application time of a luminous dot concerned and luminous dots adjacent to the luminous dot concerned and luminous intensity of the luminous dot concerned;
Fig. 2 is a block diagram showing an embodiment of a light-amount control method according to the present invention;
Fig. 3 is a perspective view showing a light-amount measuring apparatus suitable for use in a light-amount control method of the present invention;
Fig. 4(a) is a perspective view showing an optoelectronic multiplier tube;
Fig. 4(b) is a schematic side elevation view in section showing a light-amount measuring apparatus;
Fig. 5 is a schematic view showing a luminous dot pattern of a fluorescent printer head;
Fig. 6 is a diagrammatic view showing an effect of voltage application to electrodes corresponding to luminous dots adjacent to a luminous dot concerned on the luminous dot concerned; and
Fig. 7 is a diagrammatic view showing relationship between a grid voltage and a grid current.

Now, the present invention will be described hereinafter with reference to the accompanying drawings.

In a fluorescent printer head adapted to control time $T_i$ of voltage application to anodes corresponding to a plurality of luminous dots (i) ( i=1~N ) to control light amount $E_i$ outputted from each of the luminous dots (i), the light amount $E_i$ of the luminous dots (i) may be expressed in the form of a multivariable function of the voltage application time $T_i$ of the luminous dot ( j=i ) concerned and luminous dots (j≠i) adjacent to the concerned luminous dot.

First of all, formulas for the function will be given. Then, voltage application time $T_i$ of each of the luminous dots (j) should be determined so that the luminous dot (i) outputs the light amount $E_i$ of the luminous dot (i) required in correspondence to image data (concentration data $C_i$). Thus, a procedure for solving simultaneous equations therefor will be indicated.

Fig. 1 is a diagrammatic view showing voltage application time of the concerned luminous dot and neighboring luminous dots and luminous intensity of the concerned luminous dot. This considers the concerned luminous dot (i) and five luminous dots (i) adjacent to the luminous dot (i) in a lateral direction on one straight line shown in Fig. 5(a) (j=i-2 ~ i+2 ). In Fig. 1, an upper stage section indicates voltage $V_j$ (j=i-2 ~ i+2 ) applied to an anode electrode corresponding to each of the concerned luminous dots and neighboring luminous dots. An intermediate stage section is a current density $J_i(t)$ of each of the concerned luminous dots (i) and a lower stage section is luminous intensity $P_i(t)$ of each of the luminous dots (i).

In the illustrated embodiment, an anode electrode corresponding to the luminous dot (i-2) has a voltage $V_{i-2}$ of a positive level applied thereto during a period of $t=0\sim T_{i-2}$. An anode corresponding to the luminous dot (i-1) has a positive voltage $V_{i-1}$ applied thereto during a period of $t=0\sim T_{i-1}$. The luminous dot (i) has a positive voltage Vi applied thereto during a period of $t=0\sim T_i$. The luminous dot (i+1) has a positive voltage $V_{i+1}$ applied thereto during a period of $t=0\sim T_{i+1}$. The luminous dot (i+2) has a positive voltage $V_{i+2}$ applied thereto during a period of $t=0\sim T_{i+2}$.

Relationship between light amount $E_i$ of the fluorescent printer head and the voltage application time $T_j$ (j=1, 2, • • • , N ) may be indicated by a multivariable function represented by the following formula (4):

$$E_i = f_i(T_{i-m}, \cdots, T_i \cdots, T_{i+n}) \tag{4}$$

wherein i = 1, 2, • • • , N; 0≦m≦i-1; and 0≦n≦N-i.

The voltage application time $T_i$ is determined so that the relationship of the formula (4) may be established for each of the luminous dots (i). $T_i$ may be determined by solving the N-dimensional simultaneous equations (4) in connection with the known target light amount $E_i$.

In the formula (4), the voltage application times $T_{i-m}$, • • • , $T_i$, • • • , $T_{i+n}$ which are factors of the function fi are rearranged in an ascending order of time, supposing that the values of the voltage application times are given. In the illustrated embodiment, they are rearranged in order of $T_{i-1}$, $T_{i+2}$, $T_{i-2}$, $T_{i+1}$ and $T_i$. Also, dot numbers corresponding to the values are set to be σ(1)=i-1 , σ (2)=i+2 , σ(3)=i-2 , σ(4)=i+1 and σ(5)=i .

For convenience, the following formula is set:

$$T_{\sigma(0)}:=0\ ,\ T_{\sigma(m+n+2)}:=\tilde{T}$$

More specifically, the voltage application time during turning-on over a whole period is represented by $T^{\sim}$ (T tilde), $T^{\sim}$ is set to be equal to $T_{\sigma(s)}$, and time at which voltage application is started is represented by $T_{\sigma(0)}$.

Thus, when a magnitude of the voltage application time $T_j$ (j=i-m, • • • , i, • • • , i+n ) is at a k-th position from a lower side, relationship in correspondence between j and k is represented by j= σ(k) . Thus, the following formula (5) is obtained:

$$T_{\sigma(0)} \leq T_{\sigma(1)} \leq T_{\sigma(2)} \leq \cdots \leq T_{\sigma(m+n+1)} \leq T_{\sigma(m+n+2)} \tag{5}$$

Then, t which satisfies the following formula is named a period k (k=1, 2, • • • , m+n+2 ).

$$T_{\sigma(k-1)} \leq t \leq T_{\sigma(k)}$$

More specifically, the number k is assigned to a period between each adjacent two voltage application times when the times are arranged in order. As will be noted from the upper stage section of Fig. 1, an ON-OFF combination pattern of voltage application to electrodes corresponding to the luminous dot concerned and neighboring luminous dots (j)( j=(i-m)~(i+n) ) is not varied during each period k.

In the fluorescent printer head, current density $J_i$ (t) of the luminous dot (i) at certain time is varied depending on the ON-OFF combination pattern of voltage application to the electrodes corresponding to the concerned luminous dot (i) and neighboring luminous dots (j). Such a combination pattern is arranged in order of array of the luminous dots (j) while respectively setting ON and OFF at 1 and 0 and represented by the following bit sequence:

$$\{b_s\} = \{b_{i-m} \cdots b_i \cdots b_{i+n}\}$$

In the illustrated embodiment, $\{b_s\}$ = {11111} is established at a period k=1, $\{b_s\}$ = {10111} is established at a period k=2, $\{b_s\}$ = {10110} is established at a period k=3, $\{b_s\}$ = {00110} is established at a period k=4, $\{b_s\}$ = {00100} is established at a period k=5, and $\{b_s\}$ = {00000} is established at a period k=6.

During the period k, the bit sequence $\{b_s\}$ is rendered constant, so that the current density during the period k is rendered constant and may be represented as a function of a pattern of a bit sequence $\{b_s^{(k)}\}$. Thus, it is represented by the following formula (6).

$$\bar{J}_i^{(k)} = J_i(b_{i-m}^{(k)} \cdots b_i^{(k)} \cdots b_{i+n}^{(k)}) = J_i(\{b_s^{(k)}\}) \qquad (6)$$

The bit during the period k is represented by the following formula (7) by expressing reverse conversion of the above-described $j=\sigma(k)$ as $k=\sigma^{-1}(j)$ and substituting s for j;

$$b_s^{(k)} = \begin{cases} 1 & k \le \sigma^{-1}(s) \le m+n+1 \\ 0 & 1 \le \sigma^{-1}(s) \le k-1 \end{cases} \qquad (7)$$

Thus, when an order $\sigma^{-1}(s)$ of the voltage application time of the luminous dot (s) is k or more during the period k, voltage application to the electrode corresponding to the luminous dot (s) is rendered ON; whereas when the order $\sigma^{-1}(s)$ of the voltage application time of the luminous dot (s) is below k, the voltage application is OFF.

Current density of the luminous dot (i) is rendered constant during the period k and varied in a step-like manner as shown in the intermediate stage section of Fig. 1. The current density may be represented according to the following formula (8) using a unit function:

$$J_i(t) = \sum_{k=1}^{m+n+2} \bar{J}_i^{(k)} u\left(\frac{t - T_{\sigma(k-1)}}{T_{\sigma(k)} - T_{\sigma(k-1)}}\right) \qquad (8)$$

wherein u(x) is a unit function and represented according to the following formula (9):

$$u(x) = \begin{cases} 1 & 0 \le x \le 1 \\ 0 & x < 0 \quad \text{or} \quad x > 1 \end{cases} \qquad (9)$$

More particularly, the formula (8) indicates that time t is rendered constant during a period between $T_{\sigma(k-1)}$ and $T_{\sigma(k)}$.

Luminous intensity $P_i(t)$ (luminous power) of the luminous dot with respect to the current density has time response characteristics determined depending on a phosphor material. A life $\tau$ of excitation at a luminous center of a phosphor complies with statistical distribution. In a conventional phosphor such as ZnO:Zn or the like which is used for a fluorescent printer head, a distribution function of the life $\tau$ is given by the following formula (10):

$$h(\tau)=\lambda e^{-\lambda\tau} \qquad (10)$$

wherein $\lambda$ is a constant different depending on a phosphor material. It is about $(5\ \mu s)^{-1}$ when the phosphor is ZnO:Zn.

The luminous intensity $P_i(t)$ with respect to the current density $J_i(t)$ is given by the following formula (11) using the above-described formula (10):

$$P_i(t) = \eta_i V_i \int_{-\infty}^{t} J_i(t')h(t-t')dt' = \eta_i V_i \int_{0}^{\infty} J_i(t-t')h(t')dt' \qquad (11)$$

wherein $V_i$ indicates an applied voltage as excitation energy of the phosphor and $\eta_i$ is emission efficiency. The luminous intensity $P_i(t)$ is shown in the lower stage section of Fig. 1.

The light amount $E_i$ of the luminous dot (i) is given by the following formula (12) by integrating the luminous intensity $P_i(t)$ shown in the formula (11) over whole time:

$$E_i = \int_{-\infty}^{\infty} P_i(t)dt = \eta_i V_i \int_{-\infty}^{\infty} dt \int_{0}^{\infty} dt' J_i(t-t')h(t') = \eta_i V_i \int_{0}^{\infty} dt' h(t') \int_{-\infty}^{\infty} dt J_i(t-t') \qquad (12)$$

Integration of $J_i(t-t')$ in the fourth item of the formula (12) is carried out by substituting t-t' for t in the formula (8), resulting in being given by the following formula (13):

$$\int_{-\infty}^{\infty} J_i(t-t')dt = \sum_{k=1}^{m+n+2} \bar{J}_i^{(k)} \int_{-\infty}^{\infty} u\left(\frac{(t-t')-T_{\sigma(k-1)}}{T_{\sigma(k)}-T_{\sigma(k-1)}}\right)dt = \sum_{k=1}^{m+n+2} \bar{J}_i^{(k)}\left(T_{\sigma(k)}-T_{\sigma(k-1)}\right) \qquad (13)$$

Also, the following formula (14) is given by the formula (10):

$$\int_{0}^{\infty} h(\tau)d\tau = 1 \qquad (14)$$

The formula (14) is normalization conditions for the distribution function $h(\tau)$ and may be considered to be generally established. Substitution of t' for $\tau$ causes the fourth item h(t') of the formula

$$E_i = \eta_i V_i \sum_{k=1}^{m+n+2} \bar{J}_i^{(k)}\left(T_{\sigma(k)}-T_{\sigma(k-1)}\right) \qquad (15)$$

(12) to be integrated to be 1. Thus, the formula (12) is given by the following formula (15):

In the intermediate stage section of Fig. 1, the formula (15) indicates that the light amount $E_i$ of the luminous dot (i) is obtained by multiplying a value obtained by integrating the current density $J_i(t)$ of the luminous dot with time by $\eta_i V_i$. More particularly, the light amount is obtained by multiplying the current density of the luminous dot (i) during the period K by a time length ($T_{\sigma(k)}$-$T_{\sigma(k-1)}$) to prepare a value and subjecting the value to addition over the whole period k, followed by multiplication of the added value by $\eta_i V_i$. Thus, it will he noted that a transient variation in luminous intensity $P_i(t)$ at the time of rising and that at the time of trailing which are seen in the luminous intensity $P_i(t)$ shown in the lower stage section of Fig. 1 are strictly offset by each other.

The formula (15) indicates that the light amount $E_i$ is obtained by obtaining a difference between the current density during the period (k) and that during the next period (k+1) for every voltage application time $T_{\sigma(k)}$ and multiplying the difference by the voltage application time $T_{\sigma(k)}$. Then, the multiplied value is subject to addition over the whole period and then multiplied by $\eta_i V_i$, resulting in the light amount $E_i$ being obtained. In the intermediate stage section of Fig. 1, an area of a rectangle of which a lateral length is defined by the voltage application time $T_{\sigma(k)}$ and a longitudinal length is defined by a difference in current density between each adjacent two periods is found for every voltage application time $T_{\sigma(k)}$ and then a sum total of the area is calculated, resulting in a whole area being obtained.

The formula (15) may be rewritten as indicated by a formula (16) described hereinafter. It is separated into intermediate voltage application time $T_{\sigma(k)}$ (k=1~m+n+1 ), voltage application time $T_{\sigma(m+n+2)}$ and voltage application start time $T_{\sigma(o)}$. Also, as will be noted from Fig. 1 as well, the current density is rendered zero during a last period corresponding to the whole voltage application time and the voltage application start time is zero. Thus, the following formulas are established:

$$T_{\sigma(0)} = 0,\ \bar{J}_i^{(m+n+2)} = 0$$

Thus, the following formula (16) is established:

$$E_i = \eta_i V_i \sum_{k=1}^{m+n+1} \{ \overline{J}_i^{(k)} - \overline{J}_i^{(k+1)} \} T_{\sigma(k)} + \eta_i V_i \{ \overline{J}_i^{(m+n+2)} T_{\sigma(m+n+2)} - \overline{J}_i^{(1)} T_{\sigma(0)} \}$$
$$= \eta_i V_i \sum_{k=1}^{m+n+1} \{ \overline{J}_i^{(k)} - \overline{J}_i^{(k+1)} \} T_{\sigma(k)} \quad (16)$$

$k=\sigma^{-1}(j)$ , therefore, rearrangement of an order in which the sum of the formula (16) is taken from an order of the period k to an order of the dot number j of the luminous dot (i) provides the following formula (17):

$$E_i = \eta_i V_i \sum_{j=i-m}^{i+n} \{ \overline{J}_i^{(\sigma^{-1}(j))} - \overline{J}_i^{(\sigma^{-1}(j)+1)} \} T_j \quad (17)$$

Further, a function of the bit string is represented by the following formula (18) using the formula (6) described above:

$$E_i = \eta_i V_i \sum_{j=i-m}^{i+n} \{ J_i(\{b_s^{(\sigma^{-1}(j))}\}) - J_i(\{b_s^{(\sigma^{-1}(j)+1)}\}) \} T_j \quad (18)$$

Now, as relationship similar to that of the formula (6), the luminous intensity (luminous power) is represented by the following formula, as shown in the lower stage section of Fig. 1 indicating the luminous intensity $P_i(t)$:

$$\overline{P}_i^{(k)} = P_i(b_{i-m}^{(k)} \cdots b_i^{(k)} \cdots b_{i+n}^{(k)}) = P_i(\{b_s^{(k)}\})$$

Then, when the formula (18) is represented by the luminous intensity readily measurable as compared with the current density using the following formula (19):

$$P_i(\{b_s^{\sigma-1(j)}\}) := \eta_i V_i J_i(\{b_s^{\sigma-1(j)}\}) \quad (19)$$

the following formula (20) is obtained:

$$E_i = \sum_{j=i-m}^{i+n} \{ P_i(\{b_s^{(\sigma^{-1}(j))}\}) - P_i(\{b_s^{(\sigma^{-1}(j)+1)}\}) \} T_j \quad (20)$$

wherein the bit string $\{b_s^{(k)}\}$, $k=\sigma^{-1}(j)$ is given by the formula (7) described above.

According to the formula (20), the light amount $E_i$ required according to input image data with respect to each of the luminous dots (i) is represented in the form of a multivariable function wherein time $T_j$ of voltage application to anodes corresponding to each luminous dot concerned and luminous dots (j) (j=i-m~i+n ) adjacent to the concerned luminous dot is a variable. This has a coefficients corresponding to a difference between the periods $k=\sigma^{-}(j)+1$ and $k=\sigma^{-1}(j)$ in connection with the luminous intensity $P_i\{b_s^{(k)}\}$ depending on the bit string $\{b_s^{(k)}\}$ indicating the ON-OFF combination pattern of voltage application. In this connection, the bit string $\{b_s^{(k)}\}$ depends on the variable $T_j$, resulting in the coefficient likewise depending on the variable $T_j$. The luminous intensity $P_i(\{b_s^{(k)}\})$ depending on the pattern of the bit string $\{b_s^{(k)}\}$ is previously measured and set.

The formula 20 described above, as shown in the formula (12) described above, is based on the fact that the light amount (luminous energy) of each of the luminous dots (i) has a value obtained by integrating the luminous intensity $P_i(t)$ (luminous power) with time.

By determining voltage application time $T_j$ of the electrodes corresponding to a plurality of the luminous dots (j) using the above-described formula (20) so that the light amount $E_i$ required depending on input image data with respect to each of the luminous dots (i) may be obtained, the luminous dot (i) is permitted to output the light amount $E_i$ in which voltage application to the electrodes corresponding to the neighboring luminous dots (j) (j≠i) is considered.

Division of the formula (20) into j=i-m~i-1 , j=i and j=i+1~i+n provides the following formula (20-1):

$$E_i = \sum_{j=i-m}^{i-1}\left\{P_i(\{b_s^{(\sigma^{-1}(j))}\}) - P_i(\{b_s^{(\sigma^{-1}(j)+1)}\})\right\}T_j + \left\{P_i(\{b_s^{(\sigma^{-1}(i))}\}) - P_i(\{b_s^{(\sigma^{-1}(i)+1)}\})\right\}T_i + \sum_{j=i+1}^{i+n}\left\{P_i(\{b_s^{(\sigma^{-1}(j))}\}) - P_i(\{b_s^{(\sigma^{-1}(j)+1)}\})\right\}T_j \quad (20\text{-}1)$$

During a period for which the luminous dot (i) concerned is kept OFF, the light amount of the luminous dot (i) is zero even when the neighboring luminous dots (j) (j≠i) are ON. Thus, the period $k=\sigma^{-1}(i)$ is a last period of the voltage application time $T_i$ of the luminous dot (i), therefore, the following formula (20-2) is established during the next period $k=\sigma^{-1}(i)+1$ :

$$P_i(\{b_s^{(\sigma^{-1}(i)+1)}\}) = 0 \quad (20\text{-}2)$$

Also, when the period $k=\sigma^{-1}(j)$ is later than a period next to the last period $\sigma^{-1}(i)$ of the voltage application time $T_i$ of the luminous dot (i) ($\sigma^{-1}(j) > \sigma^{-1}(i)$), the following formula (20-3) is

$$P_i(\{b_s^{(\sigma^{-1}(j))}\}) = 0, \quad P_i(\{b_s^{(\sigma^{-1}(j)+1)}\}) = 0 \quad (20\text{-}3)$$

established:

Incorporation of the formula (20-2) into the formula (20-1) provides the following formula (21):

$$E_i = \sum_{j=i-m}^{i-1}\left\{P_i(\{b_s^{(\sigma^{-1}(j))}\}) - P_i(\{b_s^{(\sigma^{-1}(j)+1)}\})\right\}T_j + P_i(\{b_s^{(\sigma^{-1}(i))}\})T_i + \sum_{j=i+1}^{i+n}\left\{P_i(\{b_s^{(\sigma^{-1}(j))}\}) - P_i(\{b_s^{(\sigma^{-1}(j)+1)}\})\right\}T_j \quad (21)$$

Relationship indicated by the formula (20-3) is tacitly contained.

Now, finding of the coefficient $T_j$ in the above-described formula (20) or the above-described formula (21) substantially identical with the formula (20) will be discussed. In order to obtain the coefficient, it is required to know a value of the luminous intensity $P_i(\{b_s^{(k)}\})$ with respect to each bit string $\{b_s^{(k)}\}$ ( $k=\sigma^{-1}(j)$ ) in connection with each of all the luminous dots (i) ( i=1~N ). The luminous intensity depends on a pattern of the bit string during each period (k). However, it is not varied due to a difference in the period (k) itself. Thus, $\{b_s^{(k)}\} = \{b_s\}$ is considered in the following description.

The luminous intensity $P_i(\{b_s\})$ has a value other than zero only when the bit bi of the concerned luminous dot (i) is 1 ($b_i$=1). Thus, no consideration is made when the bit $b_i$ of the luminous dot (i) is 0 (bi=0). Nevertheless, in the illustrated embodiment, there are $2^4$ kinds of combination of bits of the neighboring dots (s) (s≠i). However, measuring of the combination of all the dots leads to a deterioration in efficiency. Thus, the following procedure is employed in order to obtain $P_i(\{b_s\})$ for all the dots. More particularly, the amount indicated by the following formula (22) is considered:

$$\phi_i(\{b_s\}) := \frac{P_i(\{b_s\})}{P_i(0\cdots010\cdots0)} \quad (22)$$

This indicates luminous intensity based on luminous intensity $P_i(0 \cdots 010 \cdots 0)$ obtained when only the dot (s=i) in the bit string $\{b_s^{(k)}\}$ of the concerned and neighboring luminous dots (s) is turned on. The $P_i(0 \cdots 010 \cdots 0)$ is equal to luminous intensity obtained when the luminous dot is solely turned on without considering an effect of voltage application to the electrodes corresponding to the neighboring luminous dots (j) (j≠i), resulting in being measured for the purpose of light-amount correction in the prior art.

The formula (22) described above may be represented by the following formula (23):

$$P_i(\{b_s\}) = P_i(0\cdots010\cdots0)\phi_i(\{b_s\}) \quad (23)$$

The formulas (22) and (19) permit the current density to be represented by the following formula (24):

$$\phi_i(\{b_s\}) = \frac{J_i(\{b_s\})}{J_i(0\cdots010\cdots0)} \quad (24)$$

The $\phi_i(\{b_s\})$ is determined depending on dimensions of electrodes of the fluorescent printer head, positional deviation such as inclination of filamentary cathodes, twisting thereof or the like, and a voltage applied to the electrodes. It can be considered that a variation in dimension of the electrodes of the above-described fluorescent printer head in the longitudinal direction is reduced and the electrodes are smoothly formed. Thus, when the voltage applied to the electrodes is constant, the formula (24) described above may be approximately represented in the form of an approximation of the luminous dot number i indicating a position of the luminous dots arranged by the following formula (25):

$$\phi_i(\{b_s\}) = a_0(\{b_s\}) + a_1(\{b_s\})i + a_2(\{b_s\})i^2 + \cdots + a_r(\{b_s\})i^r \quad (25)$$

In the formula (25), $a_0(\{b_s\})$, $a_1(\{b_s\})$, $\cdots$, $a_r(\{b_s\})$ are constants of (r+1) in number determined for every bit string $\{b_s\}$. It is not required to measure a value of $P_i(\{b_s\})$ for each of the bit strings $\{b_s\}$ of all the luminous dots of N in number. The $\phi_i(\{b_s\})$ is calculated by measuring the luminous intensity $P_i(\{b_s\})$ for each of the different luminous dots (i) and dividing results of the measuring by $P_i(0 \cdots 010 \cdots 0)$. Then, the coefficients $a_0(\{b_s\})$, $a_1(\{b_s\})$, $\cdots$, $a_r(\{b_s\})$ may be determined by a method of least squares. In general, it is merely required to consider a degree of the formula (25) up to an item of r=2. Thus, in the case of r=3, $\phi_i(\{b_s\})$ may be approximately obtained for all the luminous dots (i) by measuring $\phi_i(\{b_s\})$ in connection with at least four luminous dots (i).

Whereas, a value of the $P_i(0 \cdots 010 \cdots 0)$ is irregularly varied depending on a state of coating of the phosphor and the like. Thus, it is required to carry out measuring for all the luminous dots (i) (i=1~N).

$\phi_i(\{b_s\})$ is not necessarily smoothly varied in the neighborhood of both ends of the luminous dot. However, a phosphor is not deposited on a region at each of both ends of the fluorescent printer head and a plurality of dummy anode electrodes which fail to emit light by application of a voltage thereto are arranged on the region. Such dummy anode electrodes are included in the luminous dots (i). Thus, $\phi_i(\{b_s\})$ is smoothly varied in the luminous dots (i) having a phosphor deposited thereon which are actually driven for luminescence.

Now, solving of the above-described formula (20) or simultaneous equations of a multivariable function will be described. The formula (20) is represented in the form of general simultaneous equations in which $T_j$ is unknown by the following formula (26):

$$E_i \doteq \sum_{j=i-m}^{i+n} A_{ij}(T_{i-m},\cdots,T_i,\cdots,T_{i+n})T_j\,,\quad i=1\,,2\,,\ldots,N \qquad (26)$$

In this instance, a value of each of m and n is restricted by a value of i. Thus, 0≦m≦i-1. and 0≦n≦N-1 are obtained. Relationship

$$A_{ij}(T_{i-m},\cdots,T_i,\cdots,T_{i+n}) := \begin{cases} P_i(\{b_s^{(\sigma^{-1}(j))}\}) & i=j \\ P_i(\{b_s^{(\sigma^{-1}(j))}\}) - P_i(\{b_s^{(\sigma^{-1}(j)+1)}\}) & \sigma^{-1}(i) > \sigma^{-1}(j) \\ 0 & \sigma^{-1}(i) < \sigma^{-1}(j) \end{cases} \qquad (27)$$

between the formulas (20) and (21) in view of the above-described formulas (20-2) and (20-3) is represented by the following formula (27):

A value of the coefficient $A_{ij}$ is varied depending on a magnitude of the voltage application time $T_j$ of each of the luminous dots (j) (j=(i-m)~(i+n) ) or $\sigma^{-1}$(j). As a result, the coefficient $A_{ij}$ is not a constant for $T_j$ and cannot be calculated unless $T_{i-m}$, • • • , $T_i$, • • • , $T_{i+n}$ are given. Thus, the formula (26) is not normal simultaneous primary equations. However, use of an iteration method which is known as a method for solving normal simultaneous primary equations permits the variable $T_{ij}$ to be found by renewing the coefficient $A_{ij}$ every time when iteration is carried out. In the following description, a variable k indicates the number of times of iteration. It is different from k indicating the period in the foregoing description.

First numerical solution will be described in connection with application of a Gauss-Seidel iteration method by way of example.

An initial value of $T_i$ is set supposing that only the concerned luminous dot (i) emits light. Thus, the following equation (28) is established:

$$T_i^{(0)} = E_i/P_i(0\bullet\bullet\bullet 010\bullet\bullet\bullet 0),\ i=1,2,...,N \qquad (28)$$

A value $T_i^{(k)}$ at k-th time may be calculated according to the following steps (a) to (f) using a value $T_i^{(k-1)}$ at (k-1)-th time.

(a) $T_1^{(k-1)}$, $T_2^{(k-1)}$, $T_3^{(k-1)}$ • • • • $T_{1+n}^{(K-1)}$ are substituted in the formula (27) to find $A_{ij}^{(k)}$. Although relationship 1-m≦j≦1+n is established, m is zero (m=0) because i is 1 (i=1).

$$A_{1j}^{(k)} := A_{1j}(T_1^{(k-1)},\cdots,T_{1+n}^{(k-1)}) \qquad \text{for } j=1,\cdots,1+n \qquad (29)$$

(b) The thus-found $A_{ij}^{(k)}$ and $T_2^{(k-1)}$, $T_3^{(k-1)}$, • • • • $T_{1+n}^{(k-1)}$ are substituted in the first equation of the formula (26), in which i is 1 (i=1), so that $T_i$(k) is found as indicated in the following formula (30):

$$T_1^{(k)} := (A_{11}^{(k)})^{-1}\left\{E_1 - \sum_{j=2}^{1+n} A_{1j}^{(k)} T_j^{(k-1)}\right\} \qquad (30)$$

(c) $A_{ij}$ may be found according to the steps (a) and (b) as in Aij. However, $T_i$~$T_{i-1}$ are found using $T_1^{(k)}$~$T_{1-i}^{(k)}$ more accurate than $T_1^{(k-1)}$~$T_{1-i}^{(k-1)}$. Therefore, when solution is carried out up to $T_{i-1}^{(k)}$, $A_{ij}^{(k)}$ is found according to the following formula (31):

$$A_{ij}^{(k)} := A_{ij}(T_{i-m}^{(k)}, \cdots, T_{i-1}^{(k)}, T_i^{(k-1)}, \cdots, T_{i+n}^{(k-1)}) \quad \text{for } j = i-m, \cdots, i+n \qquad (31)$$

(d) The thus-obtained $A_{ij}^{(k)}$, as well as $T_{i-m}^{(k)}$, $T_{i-m+1}^{(k)}$, • • • , $T_{1-i}^{(k)}$, $T_{1+i}^{(k-1)}$, $T_{1+n}^{(k-1)}$ are substituted in the i-th equation of the formula (26), so that $T_i^{(k)}$ is solved according to the following

$$T_i^{(k)} := (A_{ii}^{(k)})^{-1}\left\{E_i - \sum_{j=i-m}^{i-1} A_{ij}^{(k)}T_j^{(k)} - \sum_{j=i+1}^{i+n} A_{ij}^{(k)}T_j^{(k-1)}\right\} \qquad (32)$$

formula (32):

(e) When solution is already carried out up to $T_{N-1}^{(k)}$, $A_{Nj}^{(k)}$ is found according to the following equation (33):

$$A_{Nj}^{(k)} := A_{Nj}(T_{N-m}^{(k)}, \cdots, T_{N-1}^{(k)}, T_N^{(k-1)}) \text{ for } j = N-m, \cdots, N \qquad (33)$$

(f) The thus-obtained $A_{Nj}^{(k)}$, as well as $T_{N-m}^{(k)}$, $T_{N-m+1}^{(k)}$ $T_{N-1}^{(k)}$ are substituted in the N-th equation of the formula (26) and $T_N^{(k)}$ is found according to the following equation (34):

$$T_N^{(k)} := (A_{NN}^{(k)})^{-1}\left\{E_N - \sum_{j=N-m}^{N-1} A_{Nj}^{(k)}T_j^{(k)}\right\} \qquad (34)$$

(g) The above-described formulas (29) to (34) are repeated according to the number of times of repetition k=1, 2, 3, • • • , so that $T_i^{(k)}$ approaches a certain constant value. The repetition is terminated when it is carried out predetermined times or an repetitive error ε is $1/(2^q-1)$ or less, wherein q is the number of quantization bits in the formula (2) described above. The repetitive error ε may be defined according to the following formula (35):

$$\varepsilon = \sum_{i=1}^{N}\left|T_i^{(k)} - T_i^{(k-1)}\right| \Big/ \sum_{i=1}^{N}\left|T_i^{(k-1)}\right| \qquad (35)$$

When $T_1$, $T_2$, • • • , $T_{N-1}$ and $T_N$ are found according to the above-described steps (a) to (g), gray level data $D_1$ on voltage application time corresponding to the luminous dots (i) which are inputted to a drive IC may be obtained by quantization according to the formula (2).

Numerical solution of the simultaneous equations (26) is not limited to a method using the above-described formulas (28) to (34).

Now, second numerical solution will be described in connection with an SOR method by way of example. This may be carried out by changing the formulas (30), (32) and (34) to the following formulas using a constant ω (0 < ω < 2), respectively. When ω is set to be 1 (ω=1), the second numerical solution is rendered identical with the first one described above.

$$\hat{T}_1^{(k)} := (A_{11}^{(k)})^{-1}\left\{E_1 - \sum_{j=2}^{1+n} A_{1j}^{(k)} T_j^{(k-1)}\right\}$$

$$T_1^{(k)} := T_1^{(k-1)} + \omega\left(\hat{T}_1^{(k)} - T_1^{(k-1)}\right)$$

$$\hat{T}_i^{(k)} := (A_{ii}^{(k)})^{-1}\left\{E_i - \sum_{j=i-m}^{i-1} A_{ij}^{(k)} T_j^{(k)} - \sum_{j=i+1}^{i+n} A_{ij}^{(k)} T_j^{(k-1)}\right\}$$

$$T_i^{(k)} := T_i^{(k-1)} + \omega\left(\hat{T}_i^{(k)} - T_i^{(k-1)}\right)$$

$$\hat{T}_N^{(k)} := (A_{NN}^{(k)})^{-1}\left\{E_N - \sum_{j=N-m}^{N-1} A_{Nj}^{(k)} T_j^{(k)}\right\}$$

$$T_N^{(k)} := T_N^{(k-1)} + \omega\left(\hat{T}_N^{(k)} - T_N^{(k-1)}\right)$$

Now, static driving of the fluorescent printer head of Fig. 5(b) in which the luminous dots are arranged in an offset manner will be described. The above description has been made in connection with static driving of the fluorescent printer head of Fig. 5 in which the luminous dots are arranged on a straight line.

The fluorescent printer head in which the luminous dots are arranged in an offset manner causes an array of the odd-numbered luminous dots 32 and that of the even-numbered luminous dots 33 to be spaced from each other, so that conditions for dimensions of the electrodes of the fluorescent printer head and the like are often varied. In this instance, the formula (25) may be separately used to separately determine the approximate coefficients $a_0(\{b_s\})$, $a_1(\{b_s\})$, • • • , $a_r(\{b_s\})$.

The above description has been made on the assumption that static driving is carried out. However, also when dynamic driving is carried out, light-amount correction using the formula (20) may be likewise applied to a plurality of luminous dots affecting each other in the case that voltage application to electrodes corresponding to neighboring luminous dots affects luminous dots concurrently selected.

Now, light-amount control will be conceptually described with reference to Fig. 2, wherein reference numeral 1 designates a vacuum fluorescent tube, 2 is a concentration correction section, 3 is a ROM, 4 is a light-amount variation correction section, 5 is a pulse width modulation section, 6 is a gray level clock generation section and 7 is an anode driver.

The vacuum fluorescent tube 1 includes a plurality of phosphor-deposited anode electrodes, grid electrodes arranged in proximity to the anode electrodes and filamentary cathodes, resulting in 480 luminous dots being arranged.

$C_1$ indicates input image data (concentration data) which function to control time of voltage application to an anode corresponding to an i-th luminous dot of the vacuum fluorescent tube 1. The input image data $C_1$ are converted into data on light amount $E_i=g(C_1)$ in the concentration correction section 2 depending on table data on a function g ($C_1$) read out of the ROM 3. Then, concentration correction or the like is carried out depending on characteristics of a photosensitive film. Then, solution of the simultaneous equations (20) or (21) described above takes place with respect to the data on the light amount $E_i$ in the light-amount variation correction section 4 using data read out of the ROM 3, so that data on voltage application time $T_i$ for determining a pulse width of a pulse signal for driving the anode corresponding to the luminous dot (i) or gray level data $D_i$ which has rendered the data on the voltage application time $D_i$ quantized are outputted.

Data on luminous intensity $P_i$(0 • • • 010 • • • ) of 480 luminous dots are stored in the ROM 3 as in the prior art and function to correct a variation in brightness or luminance of the luminous dot (i) itself. Also, data of (r+1) in number on the coefficients $a_0(\{b_s\})$~$a_r(\{b_s\})$ in the formula (25) are stored for every patterns of $2^{m+n}$ in number of the bit strings $\{b_s\}$ in order to determine $\phi_i(\{b_s\})$ in the formula (23) described above. Fig. 2 shows data in the case that the luminous dots are arranged on one straight line as shown in Fig. 1(a). Alternatively, when the luminous dots are arranged in an offset manner, data depending on the offset arrangement are stored in the ROM 3.

As described above, the luminous intensity $P_i(\{b_s\})$ has a value of 0 only when the bit $b_i$ of the luminous dot (i) concerned is 1 ($b_i$=1). Thus, data on the coefficients $a_0(\{b_s\})$~$a_r(\{b_s\})$ are not required for the patterns of the bit strings $\{b_s\}$ at the time of $b_i$=0.

The data on voltage application time $T_i$ or gray level data $D_i$ which has rendered the data on the voltage application time $D_i$ quantized are inputted to the pulse width modulation section 5. The pulse width modulation section 5 acts to count clock pulses from the gray level generation section 6 by the number depending on the data on the voltage application time $T_i$ every time when reset takes place at a predetermined cycle, resulting in generating a pulse signal of a pulse width depending on the data on the voltage application time $T_i$. When the pulse width is controlled at 8 bits, $2^8$=256 types of pulse widths are obtained, so that control at 256 gray levels may be attained.

The anode driver 7 applies an anode voltage to a plurality of anode electrodes corresponding to the plural luminous dots 31 or 32, 33 shown in Fig. 5. When static driving is carried out, the anode voltage is concurrently applied to the plural anode electrodes. Thus, the pulse signal outputted from the pulse width modulation section 5 constitutes a drive pulse signal fed to an i-th anode electrode. Therefore, the drive pulse signal is controlled at gray levels depending on the input image data $C_1$ and corrects light amount of an i-th luminous dot (i).

The above-described function of each of the first concentration correction section 2 and light-amount variation correction section 4 may be realized by an operation using a central processing unit (CPU) or a dedicated operational circuit.

The luminous dot (i) possibly causes a problem relating to a converging optical system. More particularly, the luminous dot (i) possibly causes a region of a photosensitive film which is to be inherently sensitized by the neighboring luminous dots (i-1) and (i+1) to be sensitized due to leakage exposure of the luminous dot (i) when it is exposed. In order to solve the problem, the assignee proposed a method for correcting light amount, as disclosed in Japanese Patent Application No. 165629/1997. In the present invention, target light amount required for each of the luminous dots corresponding to the input image data may be corrected as in the proposed method in view of leakage exposure with respect to the neighboring luminous dots, to thereby solve the problem.

Fig. 3 shows a light-amount measuring unit for practicing a light-amount measuring method, wherein reference numeral 1 designates a vacuum fluorescent tube, 11 is an optoelectronic multiplier tube, 12 is luminous dots being turned on, and 13 is luminous dot kept turned off. Luminous intensity $P_1$ of the luminous dot (i) is determined through measuring of light amount carried out by the optoelectronic multiplier tube. More particularly, in connection with luminous intensity $P_1$(0 • • • 010 • • • ), a voltage is applied to anode electrodes corresponding to the luminous dots to permit the luminous dots to emit light one by one and the optoelectronic multiplier tube 11 is positioned on each of the luminous dots 12 being turned on to measure luminescence of the luminous dot. Then, the vacuum fluorescent tube 1 is moved relatively to the optoelectronic multiplier tube 11 to measure light amount of each of the luminous dots.

However, in order to determine the coefficients $a_0(\{b_s\})$~ $a_r(\{b_s\})$ of the polynomial (25) described above, it is required to apply a voltage to anodes corresponding to the neighboring luminous dots to concurrently turn on the luminous dots. Thus, when the optoelectronic multiplier tube 11 concurrently receives light of the neighboring luminous dots being turned on, accuracy at which the measuring is carried out is deteriorated.

Figs. 4(a) and 4(b) show the optoelectronic multiplier tube and light-amount measuring unit, respectively. In Figs. 4(a) and 4(b), reference numerals like those in Fig. 3 designate like parts. Reference numeral 11a designates a light receiving window, 21 is a diffusion plate, 22 is a light shielding plate, and 23 is a converging optical system.

As shown in Fig. 4(a), the optoelectronic multiplier tube 11 is formed with the light receiving window 11a. The diffusion plate 21 is arranged in front of the light receiving window 11a. Light is introduced through the light receiving window 11a into the optoelectronic multiplier tube 11 and converted into an electrical signal. When a front emission type vacuum fluorescent tube is used as the line light source, a substrate on which the anode electrodes are arranged acts as a light permeating section. When the phosphors deposited on the anode electrodes emit light due to impingement of electrons emitted from the above-described filamentary cathodes (not shown) thereon, the light is outwardly discharged from meshes or slits of the anode electrodes through the light permeating section. The vacuum fluorescent tube 1 is merely required to include the luminous dots and may be a direct viewing type.

Light transmitted from the luminous dots 12 being turned on forms an image on the diffusion plate 21 through the converging optical system 23 such as a selfoc lens array or the like. The converging optical system 23 is arranged between the vacuum fluorescent tube 1 and the photosensitive film when the vacuum fluorescent tube 1 is used as the optical printer head. The light receiving window 11a of the optoelectronic multiplier tube 11 is formed into a diameter considerably larger than a size of the luminous dot. This causes the light receiving window 11a to receive light emitted from the neighboring luminous dots concurrently turned on in spite of arrangement of the converging optical system 23. In order to avoid the problem, the light shielding plate 22 formed with an aperture or slit is arranged to limit a range of incident light, to thereby permit luminous intensity of only the concerned luminous dot 12 to be detected.

Substitution of an image sensor including a charge coupling device (CCD) for the optoelectronic multiplier tube 11 permits detection of luminous intensity of which a unit is constituted by a range smaller than a size of each of the luminous dots, to thereby prevent receiving of light of the neighboring luminous dots concurrently turned on. When the optoelectronic multiplier tube 11 is used, luminous intensity of the individual luminous dots may be found by measuring luminous intensity supposing that light of the neighboring luminous dots is received and then solving the simultaneous equations.

The above description has been made in connection with the fluorescent printer head including the vacuum fluorescent tube in which the filamentary cathodes are arranged. However, even when field emission cathodes are used for this purpose, the present invention exhibits like functions and advantages because they are affected by a voltage applied to the neighboring anode electrodes. Also, the fluorescent printer head has been described by way of example, however, the present invention effectively corrects a variation in light amount due to the neighboring luminous dots even when a conventional line source is used.

As can be seen form the foregoing, the present invention is constructed so as to determine voltage application time of each of the luminous dots in view of a variation in light amount due to the neighboring luminous dots in the optical printer head, to thereby accurately output light amount required for each of the luminous dots in correspondence to image data. Such construction permits the present invention to eliminate a deterioration in image quality due to a variation in light amount owing to the neighboring luminous dots adjacent to the luminous dot concerned.

Also, the present invention permits a grid voltage to be set at a relatively low level, to thereby reduce consumption power and minimize generation of heat from the fluorescent printer head.

Further, the present invention is effectively applied to dynamic driving, as well as static driving, so long as a voltage applied to the electrodes corresponding to the neighboring luminous dots concurrently selected affects the luminous dots concerned.

Time-division drive which is carried out while increasing a space between neighboring luminous dots concurrently selected, to thereby minimize an effect of luminous dots causes a reduction in duty factor of a drive pulse, resulting in light amount of the luminous dots being reduced. On the contrary, the present invention reduces a variation in light amount while employing static driving, to thereby prevent a reduction in light amount.

In addition, the present invention permits a hardware used therefor to be constructed in a conventional manner because conversion of light amount to voltage application time is carried out by means of a CPU and a ROM conventionally used for conversion of image concentration data to light amount.

While preferred embodiments of the invention have been described with a certain degree of particularity with reference to the drawings, obvious modifications and variations are possible in light of the above teachings. It is therefore to be understood that within the scope of the appended claims, the invention may be practiced otherwise than as specifically described.

## Claims

1. A light-amount control method in an optical printer head for controlling time of voltage application to electrodes corresponding to a plurality of luminous dots to control light amount emitted from said luminous dots, comprising the step of:

   outputting the time of voltage application to the electrodes corresponding to said luminous dots while correcting a variation in light amount due to voltage application to the electrodes corresponding to the neighboring luminous dots adjacent to each of said luminous dots with respect to target light amount required depending on input image data for each of said luminous data.

2. A light-amount control method as defined in claim 1, wherein luminous intensity set for every ON-OFF combination pattern of voltage application to the electrodes corresponding to at least said neighboring luminous dots is used as luminous intensity data for each of said luminous data; and

the time of voltage application to the electrodes corresponding to said luminous dots is outputted so that light amount obtained by integrating said luminous intensity data with time for each of said luminous dots provides target light amount required depending on the input image data for each of said luminous dots.

**3.** A light-amount control method as defined in claim 2, wherein the light amount obtained by integrating the luminous intensity data with time is represented in the form of a multivariable function having coefficients depending on a variation in said combination pattern depending on a variable constituted by time of voltage application to the electrodes corresponding to each of said luminous dots and said neighboring luminous dots;

the time of voltage application to the electrodes corresponding to said luminous dots is outputted by solving simultaneous equations wherein said multivariable function for each of said luminous dots and the target light amount required depending on the input image data for each of said luminous dots are supposed to be equal to each other.

**4.** An optical printer head for controlling time of voltage application to electrodes corresponding to a plurality of luminous dots to control light amount emitted from said luminous dots, comprising:

a light-amount variation correction section fed with target light amount required depending on input image data for each of said luminous dots to correct a variation in light amount due to voltage application to the electrodes corresponding to the neighboring luminous dots adjacent to each of said luminous dots, to thereby output the time of voltage application to the electrodes corresponding to said luminous dots.

# FIG.1

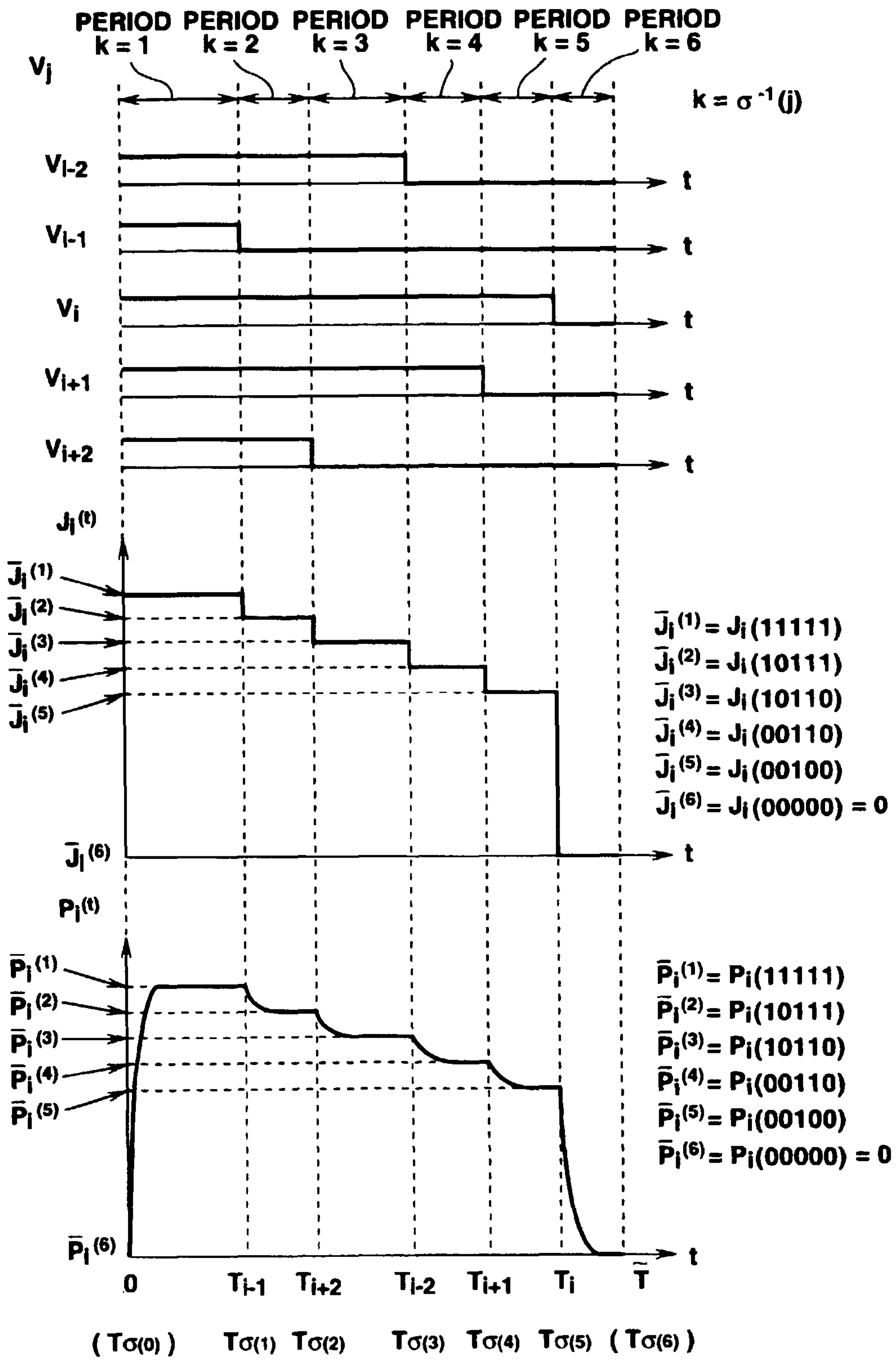

PERIOD k = 1
PERIOD k = 2
PERIOD k = 3
PERIOD k = 4
PERIOD k = 5
PERIOD k = 6
$V_j$
$k = \sigma^{-1}(j)$
$V_{i-2}$
$V_{i-1}$
$V_i$
$V_{i+1}$
$V_{i+2}$
t
$J_i(t)$
$\bar{J}_i^{(1)}$
$\bar{J}_i^{(2)}$
$\bar{J}_i^{(3)}$
$\bar{J}_i^{(4)}$
$\bar{J}_i^{(5)}$
$\bar{J}_i^{(6)}$
$\bar{J}_i^{(1)} = J_i(11111)$
$\bar{J}_i^{(2)} = J_i(10111)$
$\bar{J}_i^{(3)} = J_i(10110)$
$\bar{J}_i^{(4)} = J_i(00110)$
$\bar{J}_i^{(5)} = J_i(00100)$
$\bar{J}_i^{(6)} = J_i(00000) = 0$
$P_i(t)$
$\bar{P}_i^{(1)}$
$\bar{P}_i^{(2)}$
$\bar{P}_i^{(3)}$
$\bar{P}_i^{(4)}$
$\bar{P}_i^{(5)}$
$\bar{P}_i^{(6)}$
$\bar{P}_i^{(1)} = P_i(11111)$
$\bar{P}_i^{(2)} = P_i(10111)$
$\bar{P}_i^{(3)} = P_i(10110)$
$\bar{P}_i^{(4)} = P_i(00110)$
$\bar{P}_i^{(5)} = P_i(00100)$
$\bar{P}_i^{(6)} = P_i(00000) = 0$
0
$T_{i-1}$
$T_{i+2}$
$T_{i-2}$
$T_{i+1}$
$T_i$
$\tilde{T}$
$(T_{\sigma(0)})$
$T_{\sigma(1)}$
$T_{\sigma(2)}$
$T_{\sigma(3)}$
$T_{\sigma(4)}$
$T_{\sigma(5)}$
$(T_{\sigma(6)})$

FIG.2

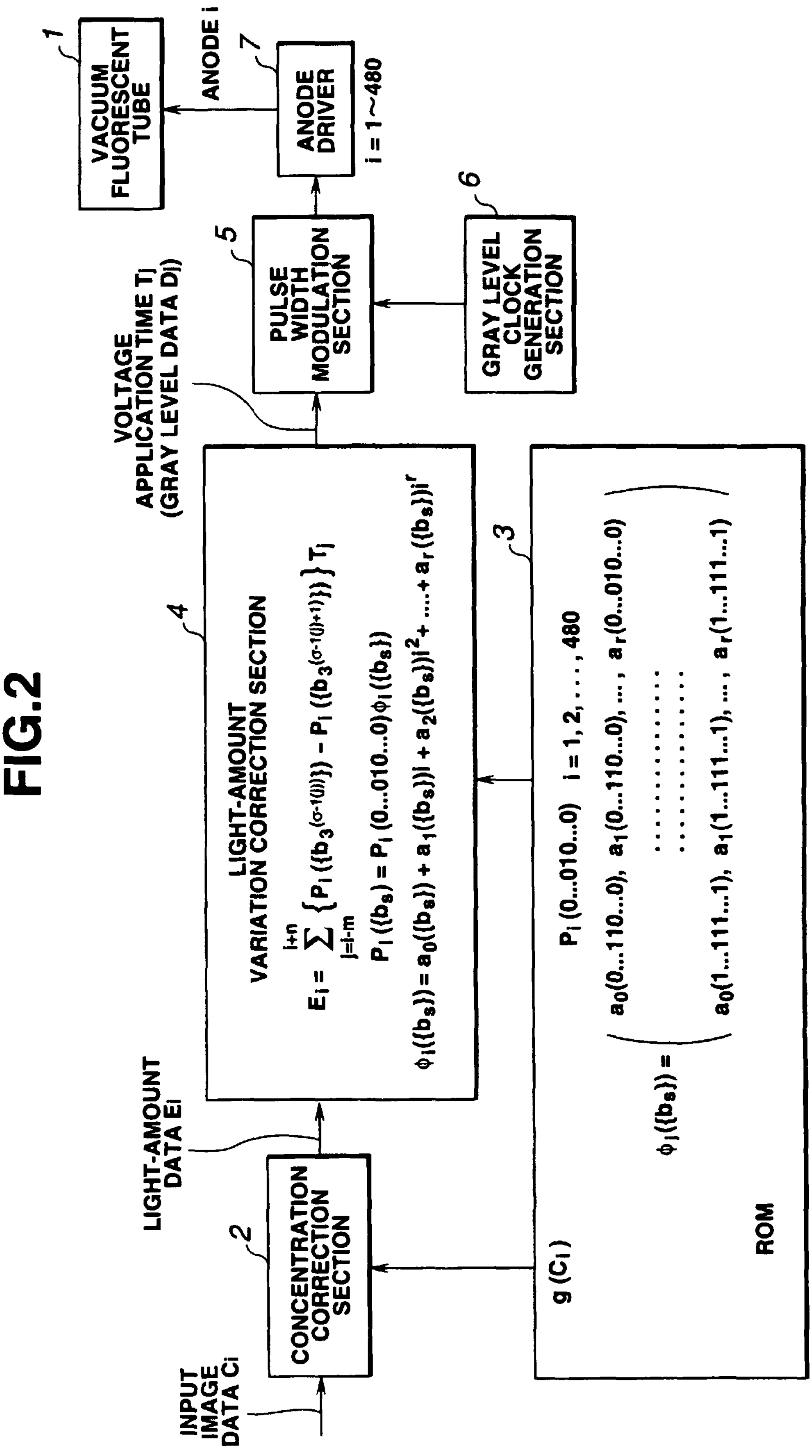
INPUT IMAGE DATA Ci
CONCENTRATION CORRECTION SECTION
2
LIGHT-AMOUNT DATA Ei
LIGHT-AMOUNT VARIATION CORRECTION SECTION
4
$E_i = \sum_{j=i-m}^{i+n} \{P_l(\{b_3^{(\sigma-1(j))}\}) - P_l(\{b_3^{(\sigma-1(j)+1)}\})\} T_j$
$P_l(\{b_s\}) = P_l(0...010...0)\phi_l(\{b_s\})$
$\phi_l(\{b_s\}) = a_0(\{b_s\}) + a_1(\{b_s\})l + a_2(\{b_s\})l^2 + .... + a_r(\{b_s\})l^r$
VOLTAGE APPLICATION TIME Tj (GRAY LEVEL DATA Dj)
PULSE WIDTH MODULATION SECTION
5
GRAY LEVEL CLOCK GENERATION SECTION
6
ANODE DRIVER
7
i = 1~480
ANODE i
VACUUM FLUORESCENT TUBE
1
3
g (Ci)
$P_l(0...010...0)$ i = 1, 2, . . . . , 480
$\phi_l(\{b_s\}) =$
$a_0(0...110...0),\ a_1(0...110...0),\ ...,\ a_r(0...010...0)$
$a_0(1...111...1),\ a_1(1...111...1),\ ...,\ a_r(1...111...1)$
ROM

# FIG.3

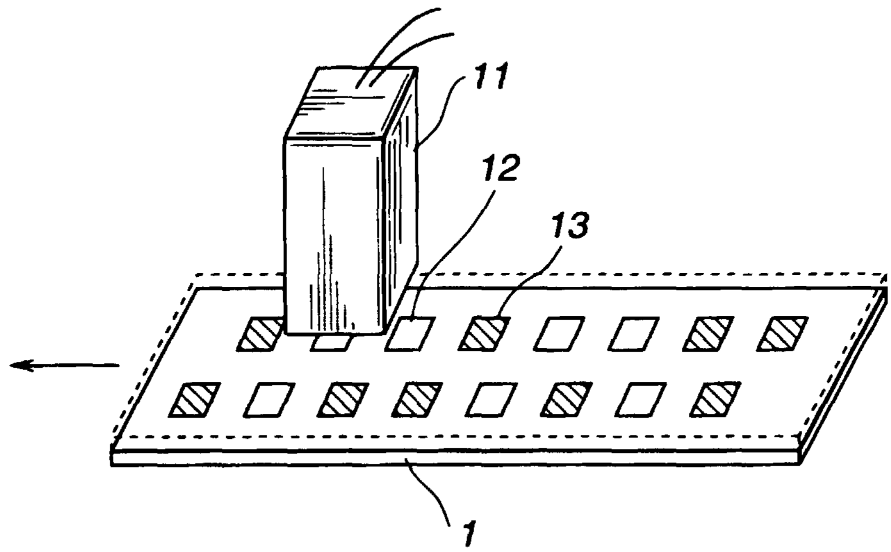


# FIG.4(a)

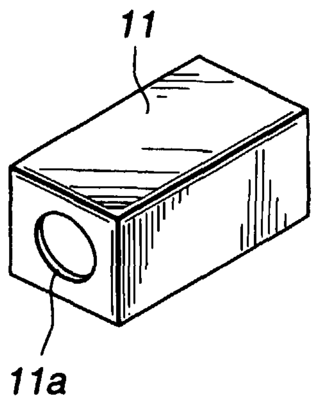


# FIG.4(b)

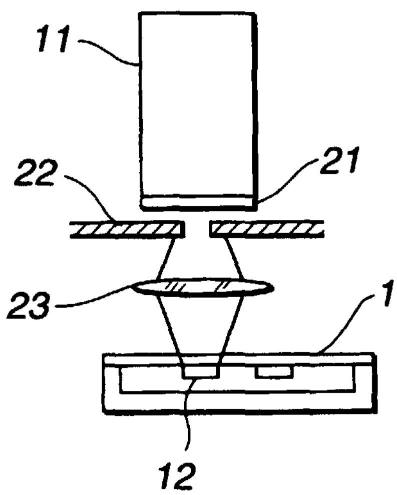

FIG.5(a)

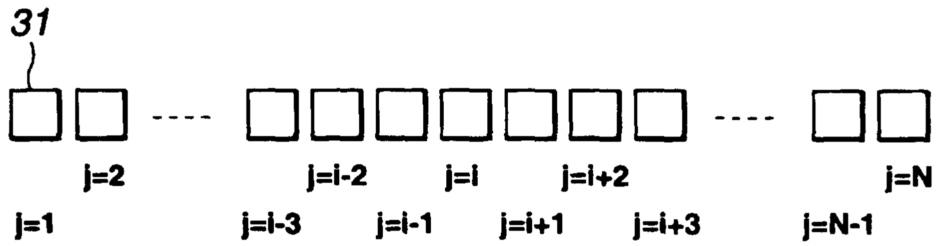
31
j=2
j=i-2
j=i
j=i+2
j=N
j=1
j=i-3
j=i-1
j=i+1
j=i+3
j=N-1

FIG.5(b)

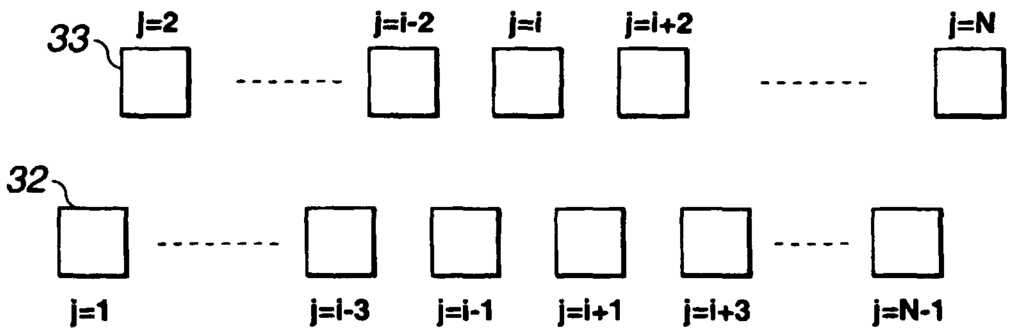
j=2
j=i-2
j=i
j=i+2
j=N
33
32
j=1
j=i-3
j=i-1
j=i+1
j=i+3
j=N-1

# FIG.6

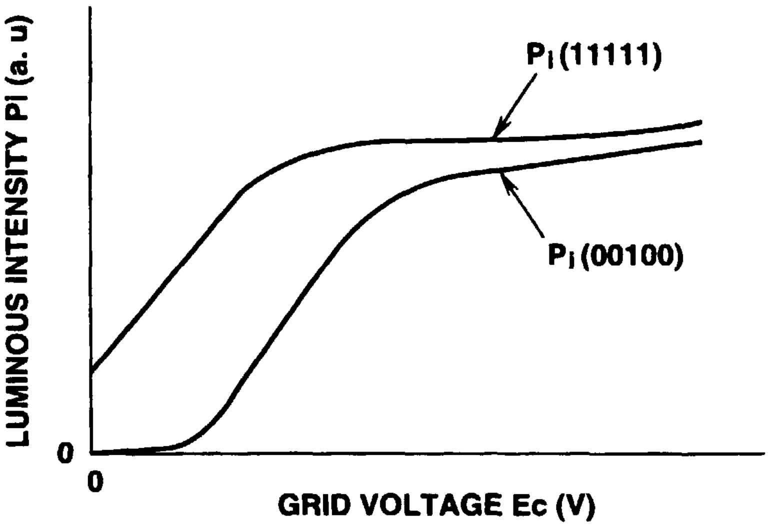
LUMINOUS INTENSITY Pl (a. u)
Pl (11111)
Pl (00100)
0
0
GRID VOLTAGE Ec (V)

# FIG.7

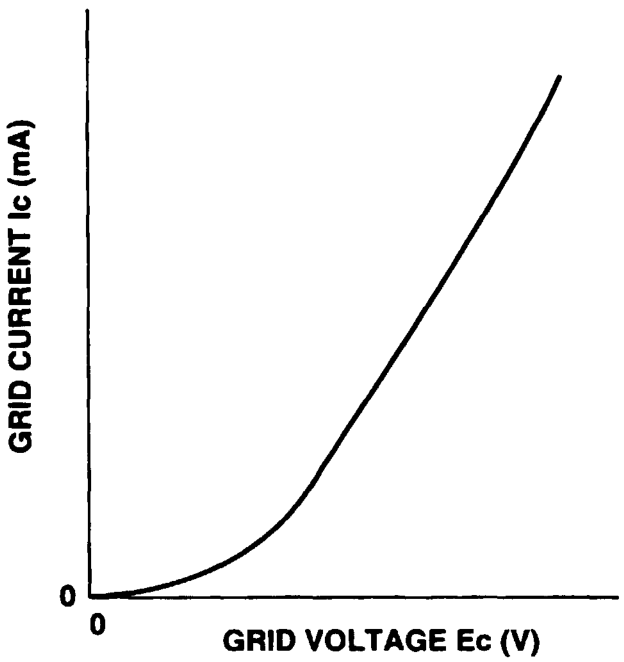
GRID CURRENT Ic (mA)
0
0
GRID VOLTAGE Ec (V)

European Patent Office

# EUROPEAN SEARCH REPORT

Application Number
EP 99 30 7958

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 772 341 A (KONISHIROKU PHOTO IND) 7 May 1997 (1997-05-07) * abstract; figures 1-22 * * page 3, line 37 - line 56 * * page 18, line 10 - page 19, line 3 * | 1-4 | H04N1/40 H04N1/401 |
| A | EP 0 738 071 A (EASTMAN KODAK CO) 16 October 1996 (1996-10-16) * abstract; figures 1-3 * | 1,4 | |
| A | EP 0 713 328 A (KONISHIROKU PHOTO IND) 22 May 1996 (1996-05-22) * abstract * * page 11, line 30 - line 57 * | 1-4 | |
| A | EP 0 750 996 A (MITSUBISHI ELECTRIC CORP) 2 January 1997 (1997-01-02) * abstract; example 7 * | 1,4 | |
| A | US 4 763 041 A (SEGAWA HIDEO) 9 August 1988 (1988-08-09) | | TECHNICAL FIELDS SEARCHED (Int.Cl.7) |
| A | US 5 586 055 A (YEH HUR-JYE ET AL) 17 December 1996 (1996-12-17) | | H04N |
| A | US 4 371 892 A (MIR JOSE M) 1 February 1983 (1983-02-01) | | |

The present search report has been drawn up for all claims

| Place of search | Date of completion of the search | Examiner |
|---|---|---|
| BERLIN | 11 January 2000 | Kassow, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 30 7958

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2000

| Patent document cited in search report | Publication date | Patent family member(s) | Publication date |
|---|---|---|---|
| EP 0772341 A | 07-05-1997 | JP 9193466 A | 29-07-1997 |
| | | US 5812176 A | 22-09-1998 |
| EP 0738071 A | 16-10-1996 | US 5608747 A | 04-03-1997 |
| | | DE 69602552 D | 01-07-1999 |
| | | DE 69602552 T | 25-11-1999 |
| | | JP 8290595 A | 05-11-1996 |
| EP 0713328 A | 22-05-1996 | DE 69512181 D | 21-10-1999 |
| | | JP 8230235 A | 10-09-1996 |
| EP 0750996 A | 02-01-1997 | JP 5092602 A | 16-04-1993 |
| | | JP 2662123 B | 08-10-1997 |
| | | JP 5104766 A | 27-04-1993 |
| | | DE 69221418 D | 11-09-1997 |
| | | DE 69221418 T | 05-03-1998 |
| | | EP 0535705 A | 07-04-1993 |
| | | KR 9612760 B | 24-09-1996 |
| | | US 5346318 A | 13-09-1994 |
| US 4763041 A | 09-08-1988 | JP 1855430 C | 07-07-1994 |
| | | JP 5074178 B | 15-10-1993 |
| | | JP 60091539 A | 22-05-1985 |
| | | JP 60091331 A | 22-05-1985 |
| | | JP 60109162 A | 14-06-1985 |
| | | JP 60109163 A | 14-06-1985 |
| US 5586055 A | 17-12-1996 | NONE | |
| US 4371892 A | 01-02-1983 | DE 3231629 C | 10-05-1990 |
| | | JP 57502242 T | 16-12-1982 |
| | | WO 8202636 A | 05-08-1982 |

EPO FORM P0459

For more details about this annex : see Official Journal of the European Patent Office, No. 12/82